**Europäisches Patentamt**

**European Patent Office**

**Office européen des brevets**

(19)

(11) Veröffentlichungsnummer : **0 384 443 B1**

(12) # EUROPÄISCHE PATENTSCHRIFT

(45) Veröffentlichungstag der Patentschrift :
29.07.92 Patentblatt 92/31

(51) Int. Cl.$^5$ : **A47J 31/40**

(21) Anmeldenummer : **90103376.1**

(22) Anmeldetag : **22.02.90**

---

(54) **Kaffeeautomat.**

---

(30) Priorität : **24.02.89 DE 8902204 U**

(43) Veröffentlichungstag der Anmeldung :
**29.08.90 Patentblatt 90/35**

(45) Bekanntmachung des Hinweises auf die
Patenterteilung :
**29.07.92 Patentblatt 92/31**

(84) Benannte Vertragsstaaten :
**AT DE DK**

(56) Entgegenhaltungen :
**DE-A- 3 019 282**

(73) Patentinhaber : **Melitta Haushaltsprodukte
GmbH & Co. Kommanditgesellschaft
Ringstrasse 99
W-4950 Minden 1 (DE)**

(72) Erfinder : **Neunast, Horst
Hainweg 12
W-4950 Minden (DE)**
Erfinder : **Schmalkuche, Jens
Dresdner Strasse 2
W-4803 Steinhagen (DE)**

(74) Vertreter : **Stracke, Alexander, Dipl.-Ing. et al
Jöllenbecker Strasse 164
W-4800 Bielefeld 1 (DE)**

EP 0 384 443 B1

Jouve, 18, rue Saint-Denis, 75001 PARIS

**Beschreibung**

Die vorliegende Neuerung bezieht sich auf einen Kaffeeautomaten mit einer eine Filterkassette aufweisenden Brüheinrichtung, wobei die Filterkassette einen Spulendorn mit einer darauf gelagerten Filterpapierrolle und einen Aufwickeldorn zur Befestigung des freien Endes der Filterpapierrolle aufweist, im Gehäuse des Kaffeeautomaten auf Führungsschienen geführt und längs dieser Führungsschienen in ihre Gebrauchsstellung innerhalb der Brüheinrichtung einschiebbar bzw. zum Wechsel des Filterpapieres aus der Brüheinrichtung herausziebar ist, wobei der Aufwickeldorn bei in Gebrauchsstellung befindlicher Filterkassette mit einem gehäuseseitigen Antrieb gekuppelt und darüber hinaus eine gehäuseseitig angebrachte Abtastrolle vorgesehen ist, welche bei in Gebrauchsstellung befindlicher Filterkassette an das Filterpapier angedrückt und mit einer den Filterpapierverbrauch registrierende Meßeinrichtung gekoppelt ist und wobei die Führungsschienen, der Spulendorn und der Aufwickeldorn parallel zueinander verlaufen. Ein derartiger Kaffeeautomat ist ans der DE-A-3019282 bekannt.

Der vorliegenden Neuerung liegt die Aufgabe zugrunde, einen Kaffeeautomaten der gattungsgemäßen Art so zu gestalten, daß eine Fehlbedienung oder Fehlfunktion durch nicht korrekt eingesetzte Filterkassette oder durch Einsetzen einer Filterkassette ohne Filterpapier vermieden sind.

Diese Aufgabe wird neuerungsgemäß dadurch gelöst, daß die Filterkassette eine mit einer quer zu den Führungsschienen verlaufenden Achse fest verbundene Betätigungsklappe od.dgl. aufweist, daß die Achse bei vollständig eingeschobener Filterkassette mit ihren Enden in dafür an den Führungsschienen vorgesehene Verriegelungsausnehmungen eingreift und in einer möglichen Drehendstellung hierin formschlüssig festgelegt ist und daß mit der Achse ein parallel zum Spulen- und Aufwickeldorn verlaufender Betätigungsstift verbunden ist, der ausschließlich bei verriegelter Achse die im Gehäuse kippbar gelagerte Abtastrolle in ihrer Betriebsstellung fixiert.

Durch diese konstruktiven Maßnahmen wird sichergestellt, daß eine Inbetriebnahme des Kaffeeautomaten nur dann möglich ist, wenn einerseits die Filterkassette ordnungsgemäß eingesetzt und verriegelt ist und wenn darüber hinaus auch noch eine Filterpapierrolle ordnungsgemäß in die Filterkassette eingelegt ist.

Bekanntlich können bei Kaffeeautomaten der gattungsgemäßen Art alle wichtigen Funktionen nur dann ausgelöst werden, wenn von der Abtastrolle das Vorhandensein von Filterpapier registriert wird. Die den Filterverbrauch regi strierende Meßeinrichtung läßt beispielsweise die Einleitung eines Brühvorganges nur dann zu, wenn ein entsprechendes Signal von der Abtastrolle über das Vorhandensein von Filterpapier gegeben wird.

Da die Filterkassette über ihren Betätigungsstift erst dann für eine ordnungsgemäße Position der Abtastrolle sorgt, wenn die Filterkassette verriegelt ist, ist eine Fehlbedienung durch nicht ordnungsgemäß eingesetzte Filterkassette verhindert. Das gleiche gilt für den Fall, daß kein Filterpapier in die Filterkassette eingelegt ist. die Abtastrolle kann dann auch bei ordnungsgemäß eingesetzter Filterkassette kein entsprechendes Signal an die Meßeinrichtung liefern, so daß auch in diesem Falle wichtige Funktionen des Kaffeeautomaten nicht ausgelöst werden können, so daß auch in diesem Falle Fehlbedienungen oder Fehlfunktionen verhindert sind.

Weitere Merkmale der Neuerung sind Gegenstand von Unteransprüchen.

Ein Ausführungsbeispiel der Neuerung ist in den beigefügten Zeichnungen dargestellt und wird im folgenden näher beschrieben. Es zeigen:

Fig. 1 eine perspektivische dargestellte Außenansicht eines Kaffeeautomaten

Fig. 2 eine perspektivische Teildarstellung des Kaffeeautomaten nach Fig. 1 in geöffneter Stellung und bei entnommener Filterkassette

Fig. 3 eine perspektivische Teildarstellung des Kaffeeautomaten nach den Fig. 1 und 2 beim Einsetzen der Filterkassette

Fig. 4 einen Horizontalschnitt durch den Kaffeeautomaten und die Filterkassette, dargestellt vor dem vollständigen Einsetzen der Filterkassette

Fig. 5 eine Ansicht in Richtung des Pfeiles V in Fig .4

Fig. 6 eine der Fig. 5 entsprechende Ansicht nach dem endgültigen Einsetzen und Verriegeln der Filterkassette

Fig. 7 einen schematisch dargestellten Schnitt nach der Linie VII-VII in Fig. 4

Fig. 8 einen Schnitt nach der Linie VIII-VIII in Fig .4

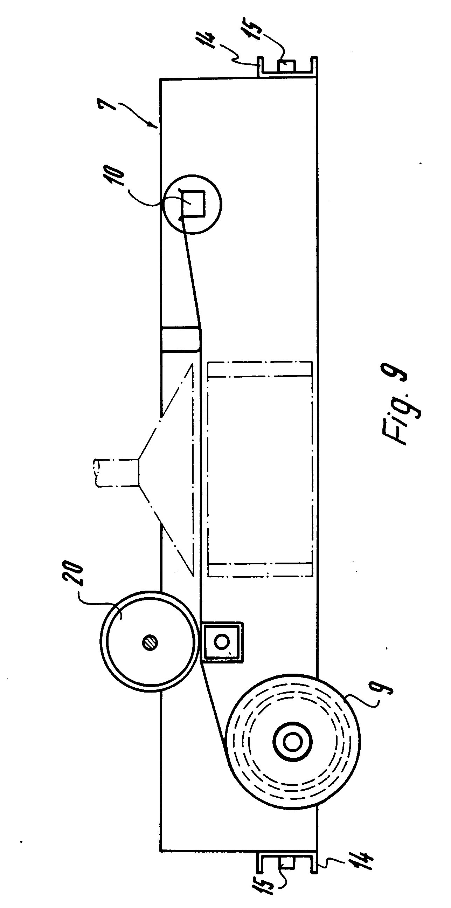

Fig. 9 eine Ansicht in Richtung des Pfeiles IX in Fig. 4.

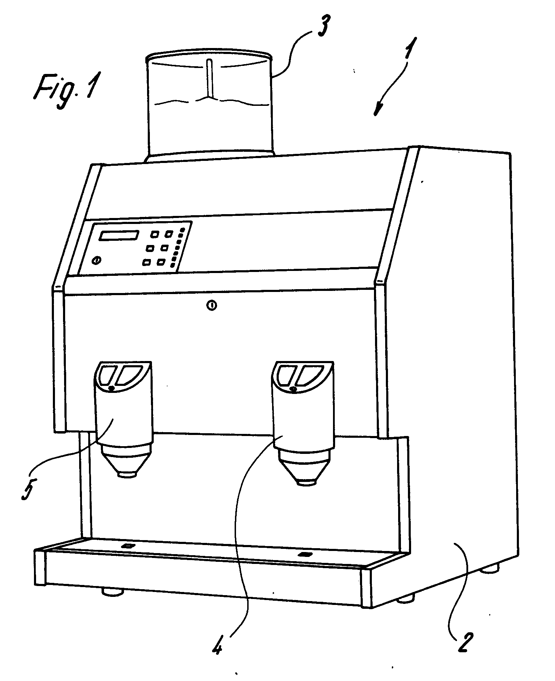

Der in Fig. 1 gezeigte Kaffeeautomat 1 ist mit einem auf seinem Gehäuse 2 angeordneten Kaffeemehlbehälter 3 ausgestattet und weist zwei Entnahmeeinrichtungen 4 und 5 auf. Die Entnahmeeinrichtung 4 dient der Entnahme von filtriertem Kaffee, während die Entnahmeeinrichtung 5 der Entnahme erhitzten Wassers dient.

Es können allerdings auch beide Entnahmestellen 4 und 5 auf die Entnahme von filtriertem Kaffee ausgelegt sein.

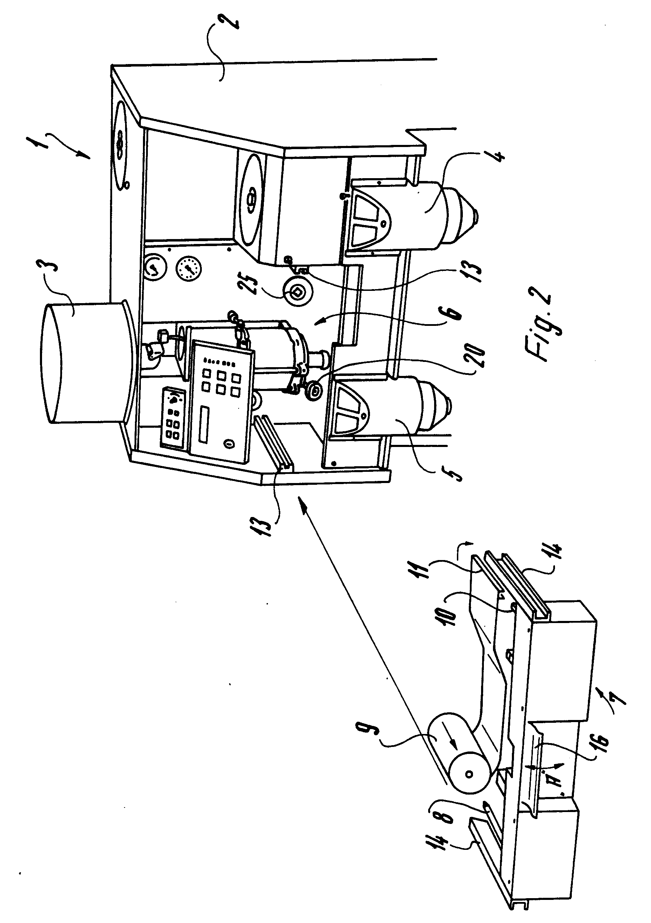

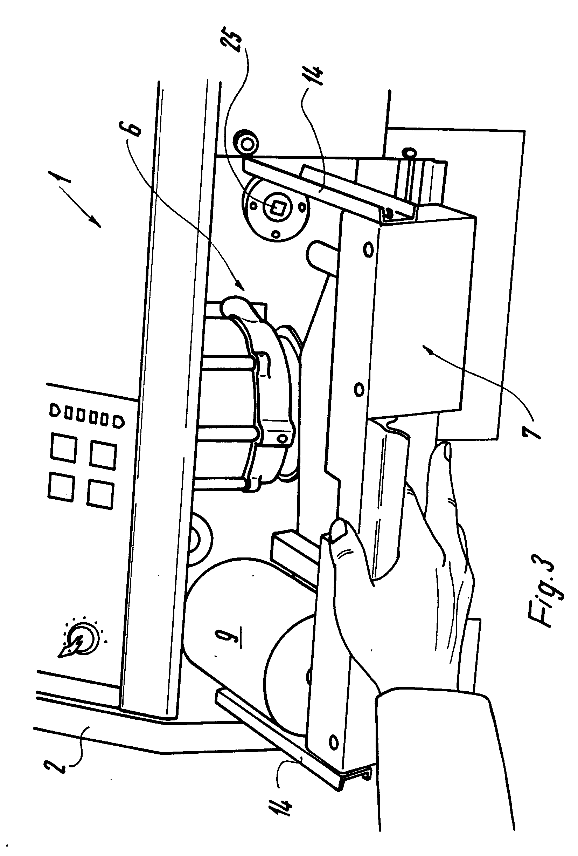

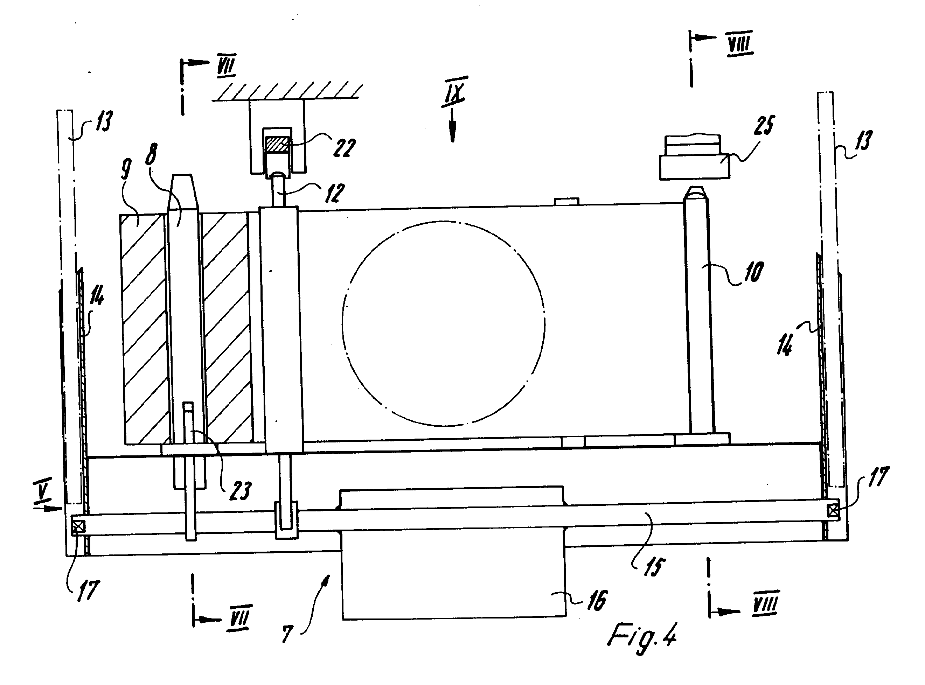

Wie die Fig. 2 und 3 deutlich zeigen, ist der Kaffeeautomat 1 mit einer Brüheinrichtung 6 ausgestattet, welche eine Filterkassette 7 aufnimmt.

Die Filterkassette 7 ist mit einem Spulendorn 8 zur Aufnahme einer Filterpapierrolle 9 und mit einem Aufwickeldorn 10 ausgestattet, auf dem das freie Ende 11 der Filterpapierrolle 9 befestigbar ist.

Weiterhin ist die Filterkassette 7 mit einem Betätigungsstift 12 versehen, dessen Bedeutung weiter unten näher erläutert wird.

Die gesamte Filterkassette 7 ist mit der Filterpapierrolle 9 in die Brüheinrichtung 6 einschiebbar. Zu diesem Zweck sind im Gehäuse 2 Führungsschienen 13 befestigt, auf denen die Filterkassette 7 geführt ist. Die Filterkassette 7 selbst ist mit den Führungsschienen 13 entsprechend profilierten Laufschienen 14 versehen.

Der Spulendorn 8, der Aufwickeldorn 10 sowie der Betätigungsstifte 12 der Filterkassette 7 verlaufen parallel zu den Laufschienen 14 und damit auch parallel zu den Führungsschienen 13.

Quer zu diesen besagten Bauteilen der Filterkassette 7 verläuft eine Achse 15, was insbesondere Fig. 4 sehr anschaulich zeigt. Mit dieser Achse 15 fest verbunden ist eine Betätigungsklappe 16, die gemeinsam mit der Achse 15 im Sinne des Doppelpfeiles A in Fig. 2 etwa um 90° schwenkbar ist.

Die Enden der Achse 15 ragen bis in die Laufschienen 14 der Filterkassette 7 hinein. In diesem Endbereich ist die Achse 15 mit Abflachungen 17 versehen.

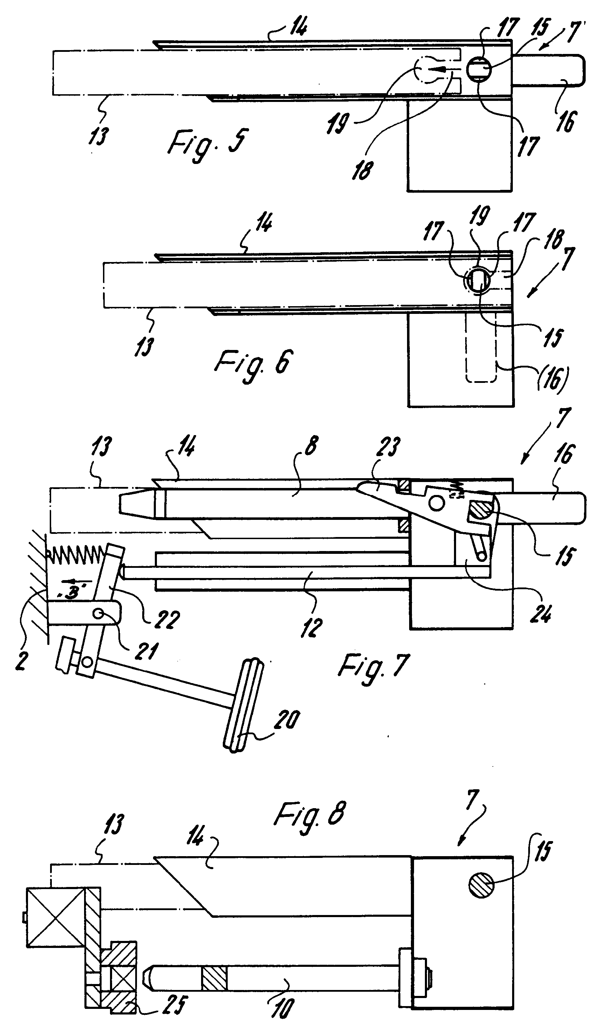

Wie die Fig. 5 und 6 deutlich machen, sind die Führungsschienen 13 endseitig mit einem Einführschlitz 18 ausgestattet, dessen Breite dem abgeflachten Endbereich des jeweiligen Endes der Achse 15 entspricht. Die Einführschlitze 18 münden in Verriegelungsausnehmungen 19, die im wesentlichen kreisrunde Querschnitte aufweisen und in ihrem Durchmesser auf den Durchmesser der Achse 15 abgestimmt sind.

Wie Fig. 5 in Verbindung mit Fig. 6 zeigt, besteht nun die Möglichkeit, die Filterkassette 7 bei in einer Drehendstellung befindlicher Betätigungsklappe 16 soweit längs der Führungsschienen 13 zu verschieben, daß die Achse 15 in einer Flucht liegt mit den Verriegelungsausnehmungen 19. Wird nun die Betätigungsklappe 16 in ihre andere Drehendstellung bewegt (s. Fig. 6), so ist ein Zurückziehen der Filterkassette 7 nicht mehr möglich, da die Achse 15 innerhalb der Verriegelungsöffnungen 16 gegen Herausziehen gesichert ist.

Erst dann, wenn die Betätigungsklappe 16 wieder in ihre aus Fig. 5 ersichtliche Stellung hochgeschwenkt ist, liegen die abgeflachten Enden der Achse 15 wieder parallel mit den Einführschlitzen 18 der Führungsschienen 13, so daß dann die Filterkassette 7 von den Führungsschienen 13 abgezogen werden kann.

Durch diese vorbeschriebenen Maßnahmen ist eine gesicherte Endstellung der Filterkassette innerhalb des Kaffeeautomaten 1 gewährleistet.

Die Fig. 7 macht deutlich, daß im Gehäuse 2 des Kaffeeautomaten 1 eine Abtastrolle 20 um einen Drehpunkt 21 pendelnd aufgehängt ist.

Diese Abtastrolle 20 wird bei in Betriebsstellung, d.h., bei vollständig eingeschobener Filterkassette 7, an das Filterpapier angedrückt. Zu diesem Zweck ist der schon erwähnte Betätigungsstift 12 vorgesehen. Fig. 7 macht deutlich, daß dieser Betätigungsstift 12 auf einen Hebel 22 einwirkt, an dem die Abtastrolle 20 befestigt ist und der um den Drehpunkt 21 drehbar gelagert ist. In Fig. 7 ist die Filterkassette 7 in noch nicht vollständig eingeschobenem Zustand dargestellt. Wird die Filterkassette 7 vollständig eingeschoben, so wird der Hebel 22 in Richtung des Pfeiles B in Fig. 7 bewegt, dadurch hebt sich die Abtastrolle 20 nach oben an und liegt dann an der Unterseite des Filterpapieres an.

Der Betätigungsstift 12 ist mit der Achse 15 derart gekoppelt, daß ein vollständiges Andrücken der Abtastrolle 20 an das Filterpapier nur bei verriegelter Filterkassette 7 möglich ist, d.h., wenn die Betätigungsklappe 16 in die aus Fig. 6 ersichtliche Stellung abgeschwenkt ist.

Die Fig. 4 und 7 machen darüber hinaus deutlich, daß der als Hohlstift ausgebildete Spulendorn 8 mit einem teilweise aus dem Spulendorn 8 herausbewegbaren Spreizhebel 23 versehen ist. Die Betätigung dieses Spreizhebels 23 wird wiederum abgeleitet von der Drehbewegung der Achse 15 über ein Kupplungsstück 24. Wie Fig. 7 deutlich macht, ist bei hochgeschwenkter Betätigungsklappe 16, welche Voraussetzung für das Herausziehen der Filterkassette 7 aus dem Gehäuse 2 des Kaffeeautomaten 1 ist, der Spreizhebel 23 teilweise über den Umfang des Spulendornes 8 hinaus ausgespreizt. Diese Maßnahme dient dem Zweck, die Filterpapierrolle 9 auf dem Spulendorn 8 zu fixieren mit dem Vorteil, daß ein Abrutschen der Filterpapierrolle 9 bei unbedachter Handhabung der Filterkassette 7 außerhalb des Gehäuses 2 des Kaffeeautomaten 1 verhindert wird.

Der Aufwickeldorn 10, der bevorzugt einen quadratischen Querschnitt aufweist, kuppelt bei vollständig eingeschobener Filterkassette 7 mit einem gehäuseseitig vorgesehenen Antrieb 25. Dieser Antrieb 25 ist nur dann einschaltbar, wenn die Abtastrolle 20, die vorrangig zur Registrierung des Filterpapierverbrauches dient, am Filterpapier anliegt, so daß ein Einschalten des Antriebes 25 beispielsweise bei nicht vollständig eingeschobener Filterkassette 7 unmöglich ist. Wird die Filterkassette 7 ohne Filterpapierrolle 9 in das Gehäuse 2 eingeschoben, so ist eine Mitnahme der Abtastrolle 20 aufgrund des mangelnden Filterpapieres nicht möglich. In diesem Falle wird der Antrieb 25 ebenfalls blockiert.

Durch die Gestaltung der Filterkassette 7 einerseits und die entsprechenden Gegenstücke der Brüheinrichtung 6 des Kaffeeautomaten 1 wird somit auf einfachste Art und Weise sichergestellt, daß Fehlfunktionen oder Fehlbedienungen des Kaffeeautomaten nicht möglich sind.

## Patentansprüche

1. Kaffeeautomat mit einer eine Filterkassette (7) aufweisenden Brüheinrichtung (6), wobei die Filterkassette (7) einen Spulendorn (8) mit einer darauf gelagerten Filterpapierrolle (9) und einen Aufwickeldorn (10) zur Aufnahme des freien Endes der Filterpapierrolle (9) aufweist, im Gehäuse (2) des Kaffeeautomaten (1) auf Führungsschienen (13) geführt und längs dieser Führungsschienen (13) in ihre Gebrauchsstellung innerhalb der Brüheinrichtung (6) einschiebbar bzw. zum Wechsel des Filterpapieres aus der Brüheinrichtung (6) herausziehbar ist, wobei der Aufwickeldorn (10) bei in Gebrauchsstellung befindlicher Filterkassette (7) mit einem gehäusesseitigen Antrieb (25) gekuppelt und darüber hinaus eine gehäuseseitig angebrachte Abtastrolle (20) vorgesehen ist, welche bei in Gebrauchsstellung befindlicher Filterkassette (7) an das Filterpapier angedrückt und mit einer den Filterpapierverbrauch registrierenden Meßeinrichtung gekoppelt ist, und wobei die Führungsschienen (13), der Spulendorn (8) und der Aufwickeldorn (10) parallel zueinander verlaufen, **dadurch gekennzeichnet,** daß die Filterkassette (7) eine mit einer quer zu den Führungsschienen (13) verlaufenden Achse (15) fest verbundenen Betätigungsklappe 16 od.dgl. aufweist, daß die Achse (15) bei vollständig eingeschobener Filterkassette (7) mit ihren Enden in dafür an den Führungsschienen (13) vorgesehene Verriegelungsausnehmungen (19) eingreift und in einer möglichen Drehendstellung hierin formschlüssig festgelegt ist und daß mit der Achse (15) ein parallel zum Spulen- und Aufwickeldorn (8,10) verlaufender Betätigungsstift (12) verbunden ist, der ausschließlich bei verriegelter Achse (15) die im Gehäuse (2) kippbar gelagerte Abtastrolle (20) in ihrer Betriebsstellung fixiert.

2. Kaffeeautomat nach Anspruch 1, dadurch gekennzeichnet, daß die Filterkassette (7) mit dem Querschnitt der Führungsschienen (13) angepaßten Laufschienen (14) versehen ist.

3. Kaffeeautomat nach Anspruch 1 oder 2, dadurch gekennzeichnet, daß die Achse (15) bis in den Bereich der Laufschienen (14) hineinragt und in ihren dortigen Endbereichen mit Abflachungen (17) versehen ist und daß die Führungsschienen (13) endseitig mit in die Verriegelungsausnehmungen (19) einmündenden Einführschlitzen (18) versehen sind, deren Breite dem abgeflachten Bereich der Enden der Achse (15) entspricht.

4. Kaffeeautomat nach einem oder mehreren der Ansprüche 1 bis 3, dadurch gekennzeichnet, daß die Abtastrolle (20) an einem Hebel (22) befestigt ist, der um einen gehäuseseitig ortsfesten Drehpunkt (21) schwenkbar gelagert und im Verschiebebereich des Betätigungsstiftes (12) angeordnet ist.

5. Kaffeeautomat nach einem oder mehreren der Ansprüche 1 bis 4, dadurch gekennzeichnet, daß der Spulendorn (8) als Hohlstift ausgebildet und mit mindestens einem Spreizhebel (23) versehen ist, der bei in Entnahmestellung verschwenkter Betätigungsklappe (16) über den Umfang des Spulendornes (8) hinausragend verschwenkt ist.

6. Kaffeeautomat nach Anspruch 5, dadurch gekennzeichnet, daß der Spreizhebel (23) über ein Kupplungsstück (24) mit der Achse (15) gekuppelt ist.

7. Kaffeeautomat nach einem oder meheren der Ansprüche 1 bis 6, dadurch gekennzeichnet, daß die Betätigungsklappe (16) od.dgl. und somit auch die Achse (15) um etwa 90° schwenkbar sind.

## Claims

1. An automatic coffee machine or percolator having a boiling device (6) with a filter cassette (7) comprising a spool mandrel (8) with a filter paper roll (9) carried thereon and a take-up mandrel (10) for receiving the free end of said filter paper roll (9), said filter cassette being guided within housing (2) of the percolator (1) on guiding rails (13) in such a way that it can be slid into its position of use within the said boiling device (6) and be withdrawn therefrom for filter paper changes, the take-up mandrel (10) being coupled to a housing-end drive (25) as the said filter cassette (7) is in its positon of use and, in addition, a sensing roll (20) arranged on the housing end being provided which, as the said filter cassette (7) is in its position of use, is pressed against the filter paper, said sensing roll being coupled to a metering device recording filter paper consumption, and said guiding rails (13), said spool mandrel (8) and said take-up mandrel extending parallel to each other, **characterized in that** said filter cassette (7) has an actuating flap or similar means as an integral part of an axle (15) extending transversally to said guiding rails (13), in that the said axle (15), as the said filter cassette (7) is fully slid in, by its ends engages locking recesses (19) provided for the purpose on the said guiding rails (13) for being positively fixed therein in a possible final turning position, and in that an actuating pin (12) extending parallel to the said spool and take-up mandrels (8,10) is linked to the said axle (15), said actuating pin fixing the said sensing roll (20) tiltably carried in the housing (2) in its operating position only when said axle (15) is locked.

2. An automatic percolator according to claim 1, characterized in that the filter cassette (7) is provided with running rails (14) adapted to the cross section of the guiding rails (13).

3. An automatic percolator according to claim 1 or claim 2, characterized in that the axle (15) extends as far as to the area of the running rails (14), being provided at its end areas there with flattened portions (17), and in that the guiding rails (13) at their ends are provided with introducing slots (18) ending in the locking recesses and having a width in correspondence with the flattened portions of the axle (15) ends.

4. An automatic percolator according to any of the claims 1 through 3, characterized in that the sensing roll (20) is mounted to a lever (22) carried pivotably about a stationary fulcrum (21) at the housing end and arranged in the displacement area of the actuating pin (12).

5. An automatic percolator according to any of the claims 1 through 4, characterized in that the spool mandrel (8) is constructed as a hollow pin and provided with an expanding lever (23) pivoted to extend beyond the circumference of the spool mandrel (8) as the actuating flap (16) is pivoted to its withdrawal position.

6. An automatic percolator according to claim 5, characterized in that the expanding lever (23) is coupled to the axle (15) via a coupling piece (24).

7. An automatic percolator according to any one of the claims 1 through 4, characterized in that the actuating flap (16) or the like and, hence, the axle (15) are pivotable by approx. 90 deg.

## Revendications

1. Percolateur automatique ayant un dispositif d'ébouillantage (6) avec une cassette de filtrage (7) comprenant un mandrin de bobine (8) avec une bobine de papier filtre (9) logée sur celui-ci et un mandrin d'enroulage (10) pour recevoir l'extrémité libre de la bobine de papier filtre (9), cette cassette de filtrage étant guidée dans le boîtier (2) du percolateur automatique (1) sur des rails de guidage (13) de façon qu'elle peut être introduite en glissant dans sa position d'usage dans le dispositif d'ébouillantage (6) et retractée de là le long ces rails de guidage (13) pour changer le papier filtre, le mandrin d'enroulage (10) étant accouplé à un mécanisme d'entraînement au coté boîtier quand la cassette de filtrage (7) est dans sa position d'usage et, de plus, un rouleau détecteur (20) étant prévu, lequel est pressé, quand la cassette de filtrage (7) est dans sa position d'usage, contre le papier filtre et accouplé à un dispositif de mesure enregistrant la consommation de papier filtre, les rails de guidage (13), le mandrin de bobine (8) et le mandrin d'enroulage (10) étant parallèles de l'un à l'autre, **charactérisé en ce** que la casssette de filtrage (7) présente un volet de commande (16) ou une pièce pareille solidaire d'un arbre (15) s'étendant transversalement aux rails de guidage (13), que l'arbre (15), quand la cassette de filtrage (7) est complètement introduite, s'enclenche par ses extrémités dans des encoches de blocage (19) prévues sur les rails de guidage (13), étant y fixé à engagement positif dans une position tournante finale, et qu'une cheville d'actionnement (12) s'étendant parallèlement aux mandrins de bobine et d'enroulage (8,10) est connectée à l'arbre (15), ette cheville d'actionnement (12) fixant dans sa position de fonctionnement le rouleau détecteur (20) basculant dans le boîtier seulement quand l'arbre (15) est bloqué.

2. Percolateur automatique selon la revendication 1, charactérisé en ce que la cassette de filtrage (7) est munie de rails de roulement (14) adaptés au coupe transversal des rails de guidage (13).

3. Percolateur automatique selon la revendication 1 ou 2, charactérisé en ce que l'arbre (15) s'étends jusqu'à la zone des rails de roulement (14), étant muni aux ses extrémités là des aplatissements (17), et que les rails de guidage sont munis à leurs extrémités des fentes d'introduction (18) débouchant dans les encoches de blocage (19) et dont la largeur corresponde à la zone aplatie des extrémités de l'arbre (15).

4. Percolateur automatique selon quelconque des revendication 1 - 3, charactérisé en ce que le rouleau détecteur (20) est attaché à un levier (22) logé pivotant autour d'un point d'appui stationnaire (21) et disposé dans la zone de déplacement de la cheville d'actionnement (12).

5. Percolateur automatique selon quelconque des revendication 1 - 4, charactérisé en ce que le mandrin de bobine (8) est en forme de cheville creuse et muni d'un levier extensible (23) pivoté à s'étendre au-delà de la périphérie du mandrin de bobine (8) quand le volet de commande (16) est pivoté dans sa position de prise.

6. Percolateuer automatique selon la revendication 5, charactérisé en ce que le levier extensible (23) est accouplé à l'arbre (15) par une pièce d'accouplement (24).

7. Percolateur automatique selon quelconque des revendication 1 - 6, charactérisé en ce que le volet de commande (16) ou une pièce pareille et, par conséquent, l'arbre (15) lui aussi sont pivotable autour d'environ 90 degrées.

Fig. 1

Fig.2

Fig.3

Fig. 4

Fig. 5

Fig. 6

Fig. 7

Fig. 8

10

Fig. 9